# EUROPÄISCHE PATENTANMELDUNG

(11) **EP 2 742 799 A1**
(43) Veröffentlichungstag der Anmeldung: **18.06.2014**
(21) Anmeldenummer: 12197294.7
(22) Anmeldetag: 14.12.2012
(51) Int. Cl.: A01K 7/02

(54) **Tränke**

(71) Anmelder: Berghofer, Friedrich, 2601 Felixdorf (AT)
(72) Erfinder: Berghofer, Friedrich, 2601 Felixdorf (AT)
(74) Vertreter: Patentanwälte Barger, Piso & Partner

(57) **Zusammenfassung**

Die Erfindung betrifft eine Tränke für Vieh, insbesondere Pferde, insbesondere zur temporären Nutzung, wie bei Ausstellungen, Wettbewerben, Messen, Turnieren, Weiden etc..

Um eine einfach zu montierende, stabile und kompakte Tränke zu schaffen, weist sie einen Vorratsbehälter (2) mit einer mittels eines Verschlusses (6) verschließbaren Einfüllöffnung (5), sowie zumindest einen, an ihm befestigten Aufhängebügel (3) und eine Tränkschale (7). Diese ist unterhalb oder im unteren Bereich des Vorratsbehälters (2) vorgesehen und steht mit dem Inneren des Vorratsbehälters (2) in hydraulischer Verbindung. Im Bereich der Verbindung ist eine Portioniervorrichtung angeordnet.

## Beschreibung

Die Erfindung betrifft eine Tränke für Vieh, insbesondere Pferde, insbesondere zur temporären Nutzung, wie bei Ausstellungen, Wettbewerben, Messen etc., entsprechend im Oberbegriff des Anspruches 1.

Bei Messen, Ausstellungen, Wettbewerben, Turnieren, Weiden, bei denen eine Vielzahl von Tieren vorübergehend in Gebäuden oder Pferchen untergebracht wird, die nicht über die für Ställe oder Koppeln üblichen Tränken verfügen, gibt es im Stand der Technik nur zwei unterschiedliche Lösungen:

Die einfache Lösung sieht das Anordnen von offenen Gefäßen, im einfachsten Fall von Kübeln, vor, die zumeist von Hand aus, aus Kanistern oder anderen Gefäßen, gefüllt werden. Dies ist arbeitsintensiv und führt zum Verspritzen und Ausgießen von viel Wasser, darüber hinaus kommt es leicht zur Verunreinigung des Wassers in den offenen Gefäßen und verschiedentlich zu deren Umstürzen, was wieder zur Beeinträchtigung der Einstreu und unter Umständen auch zur Beunruhigung der Tiere führt.

Die andere, komplexe, Möglichkeit besteht in der Verlegung einer provisorischen Wasserversorgung, entweder mit Anschluss an eine entfernte Versorgungsstelle, oder mit Zufluss aus einem Fahrzeug oder mittels Pumpe aus einem Vorrat; diese Variante ist von der Verlegung und der Demontage der Schläuche, Pumpen, Ventile, etc., her extrem aufwendig, die verlegten Schläuche stellen eine Stolpergefahr dar, und im Falle eines Bruches bzw. Platzens kommt es zum Austritt großer Mengen Wassers, was als sehr unangenehm und störend empfunden wird.

Es fehlt somit an einer einfachen, zuverlässigen, leicht befüllbaren, leicht montier- und demontierbaren Tränke, die die genannten Nachteile nicht aufweist und dabei stabil und kostengünstig ist.

Die Erfindung löst diese Probleme durch die im kennzeichnenden Teil des Anspruches 1 angegebenen Merkmale; mit anderen Worten, die Tränke weist ein Vorratsgefäß mit einer Aufhängevorrichtung für ein Gatter, einen Zaun, eine Tür odgl. auf, die mit einer Tränkmulde und einer Portioniervorrichtung dafür versehen ist. Letztere kann eine übliche, mit einem Ventil versehene Tränkvorrichtung sein, bei der das Ventil während der Benutzung der Tränke von der Schnauze des Tiers auf die übliche Weise geöffnet wird, alternativ dazu kann eine Art Siphon zur Sperre bzw. Freigabe des Luftzutritts und damit des Wasseraustritts vorgesehen sein.

Die Erfindung wird im Folgenden anhand der Zeichnung näher erläutert. Dabei zeigt bzw. zeigen
die Fig. 1 eine erfindungsgemäße Tränke in Seitenansicht,
die Fig. 2 eine Variante in Frontansicht.

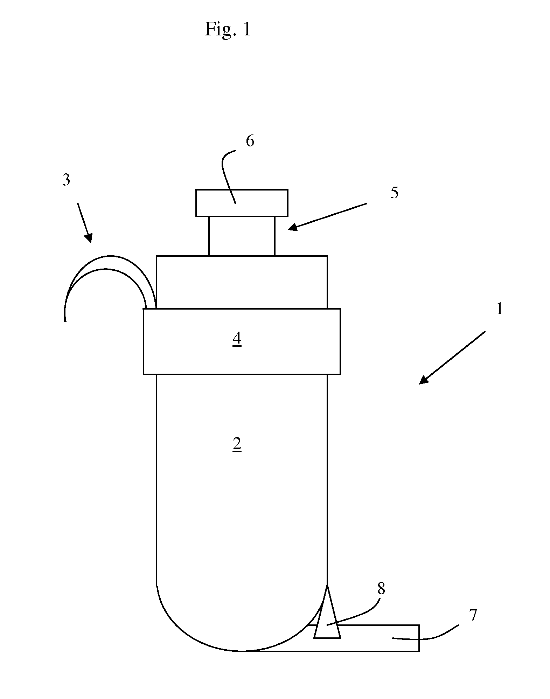

Die Fig. 1 zeigt eine erfindungsgemäße Tränke 1, sie weist einen Vorratsbehälter 2 auf, in dessen oberen Bereich ein Haltebügel 3, bevorzugt mittels eines, den Vorratsbehälter 2 wie ein Gürtel umschließendes, Befestigungsbandes 4 angeordnet ist. In der gezeigten Gebrauchsposition wird der Haltebügel 3 passend über eine Latte, oder die Oberkante eines Zaunes bzw.Boxenwand, oder eines Hakens an einer Wand, odgl. gehängt, und fixiert so den Vorratsbehälter 2 in passender Höhe in der Gebrauchsposition.

Weiters weist der Vorratsbehälter 2 eine Einfüllöffnung 5 auf, die mit einem Verschluss 6, z.B. mit einer Schraubkappe, oder auch mittels eines Klappdeckels, verschließbar ist.

Im unteren Bereich des Vorratsbehälters 2 ist die eigentliche Tränkmulde bzw. Tränkschale 7 angeordnet, die mit dem im Vorratsbehälter 2 vorhandenen Wasser über eine Verbindung samt Portioniervorrichtung in Verbindung steht.

Diese kann entweder aus einem nach unten vorspringenden Wandbereich 8 in der Verbindung nach Art eines umgekehrten Siphons erfolgen, so, dass immer dann, wenn das Wasser in der Tränkschale 7 unter den unteren Rand des Vorsprungs 8 absinkt, Luft in den Vorratsbehälter 2 einströmen und eine entsprechende Menge Wassers aus ihm in die Tränkschale 7 ausfließen kann, bis der untere Rand wieder vollständig ins Wasser eintaucht und weitere Luftzufuhr in den Vorratsbehälter unterbindet.

Alternativ dazu ist es auch möglich, zwischen der Tränkschale 7 und dem unteren Bereich des Vorratsbehälters 2 ein Ventil vorzusehen, dessen beweglicher Teil mit einem Hebel in Verbindung steht, der bei der Benutzung der Tränke von der Schnauze des trinkenden Tieres in die Offen-Position verschoben wird, gegebenenfalls gegen die Kraft einer Feder, die das Ventil in die Geschlossen-Position drängt, und so das Zuströmen von Wasser in die Tränkschale ermöglicht. Derartige Systeme sind in der Landwirtschaft in vielfacher Ausfertigung bekannt und bedürfen daher hier keiner näheren Erläuterung.

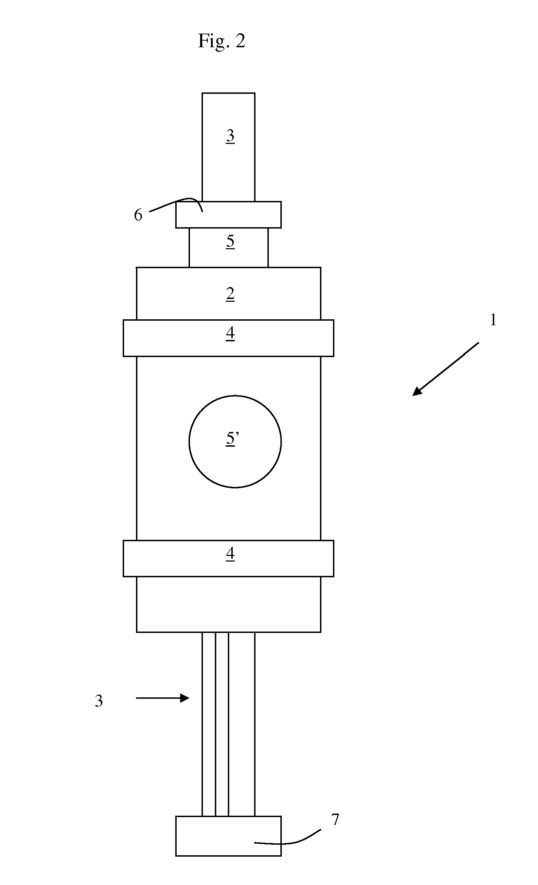

Die Fig. 2 zeigt insofern eine Variante der Vorrichtung nach Fig. 1, als der Haltebügel 3 weit unter den unteren Rand des Vorratsbehälters 2 reicht und eine Zufuhrleitung 9 zu der am untersten Bereich des Haltebügels angeordneten Tränkschale 7 trägt. Die Verbindung zwischen Vorratsbehälter 2 und Haltebügel 3 erfolgt in diesem Fall mittels zweier Befestigungsbänder 4 und ist daher sehr stabil. Als Besonderheit weist der Vorratsbehälter 2 eine große Einfüllöffnung 5' an seiner Frontwand auf, die es ermöglicht, den am Boden liegenden Behälter leicht und problemlos zu füllen. Darüberhinaus ist durch dieses Handloch eine penible Reinigung des Behälters leicht möglich. Wenn wegen des Gewichtes beim Aufhängen ein Füllen am Boden nicht gewünscht wird, kann die "übliche" Einfüllöffnung 5 in der oberen Wand auch bei der hängenden Vorrichtung verwendet werden. Vorteilhaft bei dieser Ausgestaltung ist die mechanische Stabilität und die gute Reinigungsmöglichkeit.

Der Vorratsbehälter 2 besteht bevorzugt aus lebensmitteltauglichem Kunststoffmaterial, derartige Tanks sind in verschiedenen Ausführungen, natürlich ohne die eigentliche Tränkschale 7 und den Haltebügel 3, am Markt erhältlich. Verschiedentlich ist die Einfüllöffnung 5, zumeist auf einem Stutzen angeordnet, nicht an dem in Gebrauchsstellung oberen Bereich des Vorratsbehälters 2 vorgesehen, sondern auf einer der Seitenwände (Fig. 2, Einfüllöffnung 5'), nämlich dann, wenn es sich um Tanks handelt, die üblicherweise liegend eingebaut werden, z.B. in Campingwägen, auf Schiffen, in Expeditionsfahrzeugen, etc.. In so einem Fall kann entweder eine zusätzliche Öffnung angebracht werden, oder es ist die Tränke vor der Aufhängung zu füllen.

Der Aufhängbügel 3 besteht bevorzugt aus Stahl oder Edelstahl, da üblicherweise im Vorratsbehälter 2 je nach Ausführungsform bis zu zwischen 30 und 50 Liter Wasser enthalten sein können, ist hier für eine entsprechend massive Ausbildung Sorge zu tragen. Dies besorgt auch die Krafteinleitung über das Befestigungsband 4, derartige biegsame und spannbare Gebilde, zumeist aus Stahlblech, sind im Transportwesen seit längerem bekannt. Es ist auch möglich, ähnlich wie in Fig. 2, den behälterseitigen Schenkel des Bügels 3 wesentlich länger als dargestellt auszubilden und einen zweiten Gurt im unteren Bereich des Vorratsbehälters 2 vorzusehen, um zu einer weniger punktförmigen, sondern gleichmäßigeren Krafteinleitung in den Behälter zu kommen. Selbstverständlich kann zwischen dem Behälter und dem Befestigungsband 4 eine Einlage vorgesehen sein, die insbesondere die Kantenpressung verringert und einen elastischen Ausgleich der lokal unterschiedlichen Drücke und Kräfte ermöglicht.

Die Montage der eigentlichen Tränkschale 7 am Vorratsbehälter 2 samt Verbindung zu seinem Inneren und die Anordnung der Absperrvorrichtung für den Zufluss von Wasser stellt in Kenntnis der Erfindung und der ausgewählten Bauteile kein Problem dar. Zumeist ist bei derartigen Behältern in diesem Bereich eine Ablass- bzw. Entlüftungsöffnung samt Verschlussschraube vorgesehen, die für die hydraulische Verbindung verwendet werden kann. Die Anbringung der Tränkschale 2 am Vorratsbehälter 2 erfolgt durch mechanische Befestigung (Kleben, Schrauben), gegebenenfalls unter Anbringung einer Dichtung oder eines Abdichtmittels wie Silikon, etc., es ist durchaus möglich, für Ställe übliche Tränkschalen samt deren Ventil und Ventilmechanismus in ihrer Gesamtheit zu verwenden. Wie in Fig. 2 gezeigt, ist es auch möglich, die Verbindung über eine Leitung (Schlauch) herzustellen und die Tränkschale im Abstand unterhalb des Vorratsbehälters 2 anzuordnen. Dies kann vorteilhaft sein, weil dann keine Bauteile seitlich über den Querschnitt des Behälters (samt Aufhängebügel) vorstehen. Die Portioniervorrichtung ist bei dieser Anordnung jedenfalls im Bereich der Tränkschale vorzusehen.

Wie bereits ausgeführt, sind die meisten Bauteile am Markt erhältlich, ihre Auswahl und die Montage stellen in Kenntnis der Erfindung für den Fachmann auf dem Gebiete des Installateurwesens bzw. der Landwirtschaft kein Problem dar.

Die Erfindung kann verschiedentlich abgewandelt werden, so kann der Aufhängebügel auf andere Weise befestigt werden, er kann, insbesondere bei sehr großen Behältern nach Art eines Hakens bis unter die Unterseite des Behälters reichen

### Bezugszeichenliste:

- 1: Tränke
- 2: Vorratsbehälter
- 3: Aufhängebügel
- 4: Befestigungsband

- 5: 5' Einfüllöffnung
- 6: Verschluss
- 7: Tränkschale
- 8: Vorsprung

## Patentansprüche

1. Tränke für Vieh, insbesondere Pferde, insbesondere zur temporären Nutzung, wie bei Ausstellungen, Wettbewerben, Messen, Turnieren, Weiden etc., **dadurch gekennzeichnet, dass** sie einen Vorratsbehälter (2) mit einer mittels eines Verschlusses (6) verschließbaren Einfüllöffnung (5), zumindest einen am Vorratsbehälter (2) befestigten Aufhängebügel (3) und eine Tränkschale (7) aufweist, dass die Tränkschale (7) unterhalb oder im unteren Bereich des Vorratsbehälters (2) vorgesehen ist und mit dem Inneren des Vorratsbehälters (2) in hydraulischer Verbindung steht, und dass im Bereich der Verbindung eine Portioniervorrichtung angeordnet ist.

2. Tränke nach Anspruch 1, **dadurch gekennzeichnet, dass** der Aufhängebügel (3) unter den unteren Rand des Vorratsbehälters (2) ragt und in seinem unteren Bereich die Tränkschale (7) trägt.

3. Tränke nach Anspruch 1 oder 2, **dadurch gekennzeichnet, dass** die Portioniervorrichtung nach Art eines umgekehrten Siphons ausgebildet ist, und aus einem nach unten ragenden Vorsprung (8) der Verbindung besteht, so, dass immer dann, wenn das Wasser in der Tränkschale unter den unteren Rand des Vorsprungs (8) absinkt, Luft in den Vorratsbehälter (2) einströmen und eine entsprechende Menge Wassers aus ihm in die Tränkschale (7) ausfließen kann.

4. Tränke nach Anspruch 1 oder 2, **dadurch gekennzeichnet, dass** die Portioniervorrichtung aus einem Ventil besteht, dessen Ventilteller mit einem Hebel verbunden ist, der von der Schnauze des trinkenden Tieres, gegebenenfalls gegen die Kraft einer Schließfeder, in die Offen-Position gedrängt wird.

5. Tränke nach einem der voranstehenden Ansprüche, **dadurch gekennzeichnet, dass** am Vorratsbehälter (2) eine Einfüllöffnung (5') in Form eines Handlochs vorgesehen ist.
